# EUROPÄISCHE PATENTSCHRIFT

(11) **EP 4 069 551 B1**
(45) Veröffentlichungstag und Bekanntmachung des Hinweises auf die Patenterteilung: **10.01.2024**
(21) Anmeldenummer: 20811317.5
(22) Anmeldetag: 20.11.2020
(51) Int. Cl.: B60N 2/60, B60N 2/28, B60N 2/70

(54) **DRAHTRAHMENFESTE VERBLEND- UND FÜHRUNGSVORRICHTUNG FÜR EINEN FAHRZEUGSITZ ODER EINE HINTERSITZANLAGE MIT KOMFORTABLER ISOFIX-FÜHRUNG ZUR ANBRINGUNG EINES KINDERSITZES**
WIRE FRAME ATTACHED COVER AND GUIDING DEVICE FOR A VEHICLE SEAT OR A REAR SEAT ARRANGEMENT WITH COMFORTABLE ISOFIX GUIDING FOR CHILD SEAT ATTACHMENT
DISPOSITIF DE RECOUVREMENT ET DE GUIDAGE, ACCROCHÉ SUR ARMATURE EN FIL D'ACIER, POUR SIÈGE DE VÉHICULE OU BANQUETTE ARRIÈRE, AVEC GUIDE ISOFIX CONFORTABLE POUR FIXATION DE SIÈGE ENFANT

(30) Priorität: 05.12.2019 DE 102019133177
(43) Veröffentlichungstag der Anmeldung: 12.10.2022
(73) Patentinhaber: VOLKSWAGEN AG, 38440 Wolfsburg (DE)
(72) Erfinder: KIRST, Philipp, 38179 Schwülper (DE); LÜBKE, Christian, 39638 Gardelegen (DE); MACIEJ, Steffen, 39114 Magdeburg (DE)
(74) Vertreter: Gulde & Partner
(86) Internationale Anmeldenummer: PCT/EP2020/082936
(87) Internationale Veröffentlichungsnummer: WO 2021/110443

(56) Entgegenhaltungen:
- EP-A1- 3 000 654
- CN-U- 203 410 329
- DE-A1-102016 213 264

## Beschreibung

Die Erfindung betrifft eine Verblend- und Führungsvorrichtung für eine Aussparung in einem Polsterteil eines Fahrzeugsitzes oder einer Hintersitzanlage, über die ein strukturfestes/karosseriefestes Halteelement eines Befestigungssystems eines mit einem Aufnahmeelement versehenen Ausstattungsteiles, insbesondere eines Kindersitzes erreichbar ist, wobei die Verblendvorrichtung eine Blendenöffnung mit in der Blendenöffnung angeordneten Deckel aufweist.

Aus der Druckschrift WO 2014/198462 A1 ist eine Aufnahmeeinrichtung für einen Kindersitz in einem Polsterteil eines Fahrzeugsitzes bekannt. Die Aufnahmeeinrichtung nimmt ein Aufnahmeelement eines Befestigungssystems auf. Das Befestigungssystem umfasst ein Haltelement. Das Aufnahmeelement ist Teil des Kindersitzes. Nach dem Stand der Technik ist das Halteelement im Polsterteil mit einem, eine Blendenöffnung aufweisenden Blendenelement versehen.

Das Befestigungssystem ist insbesondere ein Isofix-Befestigungssystem, welches einerseits das Haltelement umfasst, das insbesondere als strukturfester/karosseriefester Isofix-Haltebügel ausgebildet ist. Andererseits umfasst das Isofix-Befestigungssystem das Aufnahmeelement, welches zumeist als Isofix-Rastelement ausgebildet ist und in den strukturfesten/karosseriefesten Isofix-Haltebügel eingreift beziehungsweise den Haltebügel aufnimmt.

Das Isofix-Befestigungssystem ist ein bekanntes, besonders sicheres und einfach zu bedienendes Befestigungssystem, welches insbesondere zur Befestigung von Kindersitzen in einem Kraftfahrzeug verwendet wird. Bei diesem Befestigungssystem wird in einer Gebrauchsstellung des Kindersitzes zwischen dem strukturfesten Haltebügel (Halteelement) und dem befestigenden Kindersitz eine starre Verbindung zwischen der Struktur und dem Kindersitz hergestellt.

Das Prinzip wird durch die Druckschrift DE 10 2004 048 358 A1 verdeutlicht. Weiteren Stand der Technik bilden die Druckschriften JP 2001351058 A, US 2008/0111411 A1, DE 10 2016 213 264 A1, EP 3 000 654 A1 und CN 203 410 329 U.

Schließlich beschreibt die Druckschrift DE 10 2009 036 726 A1 eine Blende an einer DIN-Norm 13216 konformen Isofix-Anbindung mit einer Klappe, die in der Gebrauchsstellung, bei dem die Isofix-Anbindung verriegelt ist, verdrängt wird.

Der Erfindung liegt die Aufgabe zugrunde, eine formschöne und leicht zu montierende Verblendvorrichtung für eine Aussparung in einem Polsterteil eines Fahrzeugsitzes und/oder einer Hintersitzanlage zu schaffen, wobei über die Aussparung eine Zugänglichkeit zu einem strukturfesten Halteelement (Isofix-Haltebügel) eines Befestigungssystems gewährleistet ist. Das strukturfeste Haltelement und ein Aufnahmeelement (Isofix-Rastelement), insbesondere eines Kindersitzes bilden das Befestigungssystem, wobei dem Nutzer des Befestigungssystems, der einen Kindersitz auf dem Fahrzeugsitz und/oder der Hintersitzanlage anbringt, eine komfortable Zugänglichkeit des Aufnahmeelementes zu dem über die Verblendvorrichtung zugänglichen strukturfesten Halteelement geboten werden soll.

Die Aufgabe wird durch eine Verblend- und Führungsvorrichtung mit den Merkmalen des Anspruchs 1 gelöst.

Ausgangspunkt ist eine Verblend- und Führungsvorrichtung für eine Aussparung eines Polsterteiles in einem Fahrzeugsitz oder einer Hintersitzanlage, über die ein strukturfestes/karosseriefestes Halteelement eines Befestigungssystems eines mit einem Aufnahmeelement versehenen Ausstattungsteiles, insbesondere eines Kindersitzes, erreichbar ist, wobei die Verblendvorrichtung eine Blendenöffnung mit einem in einer Nichtgebrauchsstellung in der Blendenöffnung angeordneten Deckel aufweist, wobei der Deckel im unteren Bereich der Verblend- und Führungsvorrichtung schwenkbar angeordnet und in eine Gebrauchsstellung schwenkbar ist, in der die Rückseite des Deckels vor der Verblendvorrichtung eine Rampe bildet, wobei in der Verblend- und Führungsvorrichtung durch die Gebrauchsstellung des Deckels im unteren Bereich der Verblend- und Führungsvorrichtung ein Führungselement zugänglich wird, sodass das Aufnahmeelement entweder ausschließlich über das Führungselement oder über die Rampe und das Führungselement zu dem Halteelement führbar und an dem Halteelement fixierbar ist.

Erfindungsgemäß ist vorgesehen, dass auf der Rückseite der Verblend- und Führungsvorrichtung ein Stützfuß und ein Gegensteg als Fixiervorrichtung zur Fixierung der Verblend- und Führungsvorrichtung an einem ortsfesten Strukturteil des Fahrzeugsitzes oder der Hintersitzanlage angeordnet sind, wobei der Stützfuß auf seiner dem Gegensteg gegenüberliegenden Seite eine Aufnahmevertiefung aufweist, so dass zwischen dem Gegensteg und der Aufnahmevertiefung die Fixiervorrichtung in der Art eines Rastsitzes ausgebildet ist, wobei die Verblend- und Führungsvorrichtung über den Rastsitz auf das ortsfeste Strukturteil, welches als Steckelement ausgebildet ist, in die Aufnahmevertiefung gesteckt und mittels des Gegensteges in dem Rastsitz verrastbar ist.

In bevorzugter Ausgestaltung ist das Führungselement eine Führungsplatte zwischen den Seitenholmen der Verblend- und Führungsvorrichtung.

In bevorzugter Ausgestaltung ist vorgesehen, dass sich das gleichzeitig als Verbindungssteg wirkende, zwischen Seitenholmen der Verblend- und Führungsvorrichtung angeordnete Führungselement, insbesondere die Führungsplatte, mit ihrer vorderen deckelseitigen Stirnseite sowohl in Nichtgebrauchsstellung als auch in Gebrauchsstellung des Deckels an eine untere Stirnseite des Deckels anschließt, wodurch in vorteilhafter Weise ein im Wesentlichen stufenfreier Übergang zwischen Deckel und Führungsplatte ausgebildet ist.

Bevorzugt ist vorgesehen, dass der Deckel auf seiner Rückseite eine Verstärkungsstruktur, insbesondere mindestens eine Rippe aufweist, so dass er in vorteilhafter Weise einer erhöhten Belastung standhält.

Stützfuß und Gegensteg sind in bevorzugter Ausgestaltung unterhalb der Führungsplatte angeordnet und bevorzugt mit ihr verbunden, wodurch in vorteilhafter Weise eine kompakte und stabile Verblend- und Führungsvorrichtung ausgebildet ist.

Der Stützfuss weist in bevorzugter Ausgestaltung an seinem unteren, der Führungsplatte gegenüberliegenden Ende, einen Anschlagsteg auf. Der Anschlagsteg dient in vorteilhafter Weise der Verdrehsicherung der Verblend- und Führungsvorrichtung, wie in der Beschreibung näher erläutert ist.

Der Stützfuss und der Gegensteg sowie der Anschlagsteg weisen bevorzugt mindestens ein Versteifungselement auf, wodurch in vorteilhafter Weise die Stabilität der Bauteile erhöht wird.

In bevorzugter Ausgestaltung ist zwischen den Seitenholmen eine Auflageschräge ausgebildet, die an die vordere Stirnseite der Führungsplatte angrenzt, auf welcher der Deckel in seiner Gebrauchsstellung zumindest teilweise aufliegt, wodurch die Rampe in ihrer Gebrauchsstellung in vorteilhafter Weise selbsttätig eine schräge Rampe ausbildet, die in vorteilhafter Weise vom Nutzer intuitiv als Hilfsmittel zum Einführen des Ausstattungsteiles in den Kindersitz erkannt wird.

Eine erfindungsgemäße Anordnung zeichnet sich durch die Merkmale des Anspruchs 9 aus. Ausgangspunkt der erfindungsgemäßen Anordnung einer Verblend- und Führungsvorrichtung in einer Aussparung eines Polsterteiles eines Fahrzeugsitzes oder einer Hintersitzanlage ist, dass über die ein Halteelement eines Befestigungssystems eines mit einem Aufnahmeelement versehenen Ausstattungsteiles, insbesondere eines Kindersitzes, erreichbar ist, wobei im unteren Bereich der Aussparung in der Aussparung oder nahe der Aussparung im Schaum eines Polsterteiles ein Strukturteil einer Befestigungsstruktur als Steckelement, in der Art eines Drahtes angeordnet ist, an dem das Verblend- und Führungsvorrichtung in seiner Gebrauchsposition über einen als Fixiervorrichtung ausgebildeten Rastsitz reversibel verrastet ist.

In vorteilhafter Weise wird eine bereits vorhandene Struktur derart ausgebildet, dass sie synergistisch als Befestigungsstruktur für die Verblend- und Führungsvorrichtung und als Stützstruktur des Schaumes eines Polsterteiles des Fahrzeugsitzes oder der Hintersitzanlage nutzbar ist.

Bevorzugt ist vorgesehen, dass im unteren Bereich der Aussparung, in der Aussparung oder nahe der Aussparung im Schaum eines Polsterteiles, ein weiteres Strukturteil der Befestigungsstruktur als Verdrehsicherungselement, in der Art eines weiteres Drahtes (Verdrehsicherungsdraht) angeordnet ist, gegenüber dem die Verblend- und Führungsvorrichtung in ihrer Gebrauchsposition über einen der Verblend- und Führungsvorrichtung zugeordneten Anschlagsteg in der Aussparung verdrehsicher angeordnet ist. Diese Lösung ist in vorteilhafter Weise einfach zu realisieren.

In weiterer bevorzugter Ausgestaltung ist ferner vorgesehen, dass die Ausnahmevertiefung und der Anschlagsteg Teile eines Stützfußes sind, wobei der Draht (Steckdraht) in Gebrauchsposition der Verblend- und Führungsvorrichtung in der Aussparung in die Ausnahmevertiefung gesteckt und in der Ausnahmevertiefung von einem Gegensteg rastend gesichert ist.

Vorgesehen ist weiter, dass der Anschlagsteg des Stützfußes in der Gebrauchsposition der Verblend- und Führungsvorrichtung in der Aussparung unter Verpressung des Schaumes in den Schaum des Polsterteiles eindringt und den weiteren Draht (Verdrehsicherungsdraht) erreicht und derart hintergreift, sodass eine Drehbewegung der Verblend- und Führungsvorrichtung in Belastungsrichtung verhindert wird.

In einer anderen Ausführungsvariante ist der weitere Draht (Verdrehsicherungsdraht) nicht im Schaum des Polsterteiles angeordnet, sodass der Anschlagsteg des Stützfußes in der Gebrauchsposition der Verblend- und Führungsvorrichtung nicht in den Schaum eindringen muss. Durch den weiteren Draht (Verdrehsicherungsdraht) ist aber trotzdem sichergestellt, dass der Anschlagsteg des Stützfußes, sollte eine Kraft auf die Verblend- und Führungsvorrichtung wirken, die eine Drehbewegung hervorruft, den weiteren Draht (ohne Schaumverpressung) erreicht, da der Anschlagsteg des Stützfußes den weiteren Draht (Verdrehsicherungsdraht) in Gebrauchsposition der Verblend- und Führungsvorrichtung hintergreift, sodass eine Drehbewegung der Verblend- und Führungsvorrichtung in Belastungsrichtung verhindert wird.

Schließlich wird bevorzugt eine Anordnung vorgesehen, bei der die Drähte Teile einer ortsfesten Befestigungsstruktur, insbesondere einer Drahtstruktur im Polsterriegel zwischen Rückenlehnenteil und Sitzteil oder Teil einer Befestigungsstruktur, insbesondere einer Drahtstruktur im Schaum eines Sitzteiles sind, die in den Bereich des Schaumes des Polsterriegels geführt sind.

Die Anordnung der Verblend- und Führungsvorrichtung zeichnet sich ferner in vorteilhafter Weise dadurch aus, dass die Aussparung eine u-förmige Aussparung ist, wobei der offene Bereich des "U" durch die Verblend- und Führungsvorrichtung in ihrer Gebrauchsposition durch den oberen Bereich der Verblend- und Führungsvorrichtung formschön und vor allem bündig zur Verblend- und Führungsvorrichtung und damit in vorteilhafter Weise störkonturfrei verblendet ist. Die Aussparung kann auch als eine geschlossene Randkontur ausgebildet werden.

In vorteilhafter Weise ist in einem zentralen Bereich der Aussparung mit offener oder geschlossener Randkontur das strukturfeste/karosseriefeste Halteelement des Befestigungssystems angeordnet, welches in der Gebrauchsposition der Verblend- und Führungsvorrichtung in eine auf der Rückseite der Verblend- und Führungsvorrichtung maulartige Freimachung eingreift, wobei die Lage des strukturfesten/karosseriefesten Halteelementes innerhalb der die Aussparung und die Blendenöffnung, der sich in Gebrauchsposition befindenden Verblend- und Führungsvorrichtung derart aufeinander abgestimmt sind, dass das Aufnahmeelement des Ausstattungsteiles, insbesondere des Kindersitzes in einer Gebrauchsstellung des Deckels über eine Führungsplatte innerhalb der Blendenöffnung zugänglich wird. Das Aufnahmeelement ist in vorteilhafter Weise zur Fixierung an dem Halteelement ausschließlich mittels der Führungsplatte (erste Vorgehensweise) oder (zweite Vorgehensweise) über eine durch den Deckel in Gebrauchsstellung vor der Verblendund Führungsvorrichtung gebildete Rampe und die Führungsplatte zu dem Halteelement positionsgenau führbar und an dem Halteelement fixierbar.

Die Erfindung wird nachfolgend anhand der zugehörigen Zeichnungen erläutert. Es zeigen:
- Figur 1: eine Vorderansicht einer Hintersitzanlage mit in die Hintersitzanlage integrierten (Gebrauchsposition) Verblendvorrichtungen gemäß der Erfindung;
- Figur 2: eine vergrößerte Darstellung des Bereiches der Hintersitzanlage in dem die Verblendvorrichtungen angeordnet sind;
- Figur 3: eine perspektivische Vorderansicht auf die erfindungsgemäße Verblendvorrichtung in Nichtgebrauchsstellung außerhalb der Hintersitzanlage;
- Figur 4: eine perspektivische Seitenansicht auf die erfindungsgemäße Verblendvorrichtung außerhalb der Hintersitzanlage;
- Figur 5: eine weitere perspektivische Vorderansicht auf die erfindungsgemäße Verblendvorrichtung in Gebrauchsstellung außerhalb der Hintersitzanlage;
- Figur 6: eine Rückansicht auf die Verblendvorrichtung in Gebrauchsposition an einer Drahtstruktur;
- Figur 7: einen Kindersitz während eines Befestigungsvorganges gemäß einer ersten Vorgehensweise;
- Figur 8: den Kindersitz während eines Befestigungsvorganges gemäß einer zweiten Vorgehensweise;
- Figur 9: die Verblendvorrichtungen vor dem Verbau in eine Hintersitzanlage in ihrer Nichtgebrauchsposition;
- Figur 10A: eine Verblendvorrichtung einer Vor-Position vor der endgültigen Gebrauchsposition in der Hintersitzanlage;
- Figur 10B: die Verblendvorrichtung in der endgültigen Gebrauchsposition in der Hintersitzanlage.

Die Erfindung betrifft eine Verblendvorrichtung 10 für einen Fahrzeugsitz oder eine Hintersitzanlage 100.

Die Erfindung betrifft ferner eine Anordnung der Verblendvorrichtung 10 an dem Fahrzeugsitz oder der Hintersitzanlage 100.

Die Verblendvorrichtung 10 ist gleichzeitig eine Führungsvorrichtung für ein einzuführendes Aufnahmeelement 200.1, weshalb es sich um eine kombinierte Verblend- und Führungsvorrichtung handelt.

Zur Verkürzung wird jedoch teilweise nur der Begriff Verblendvorrichtung 10 verwendet.

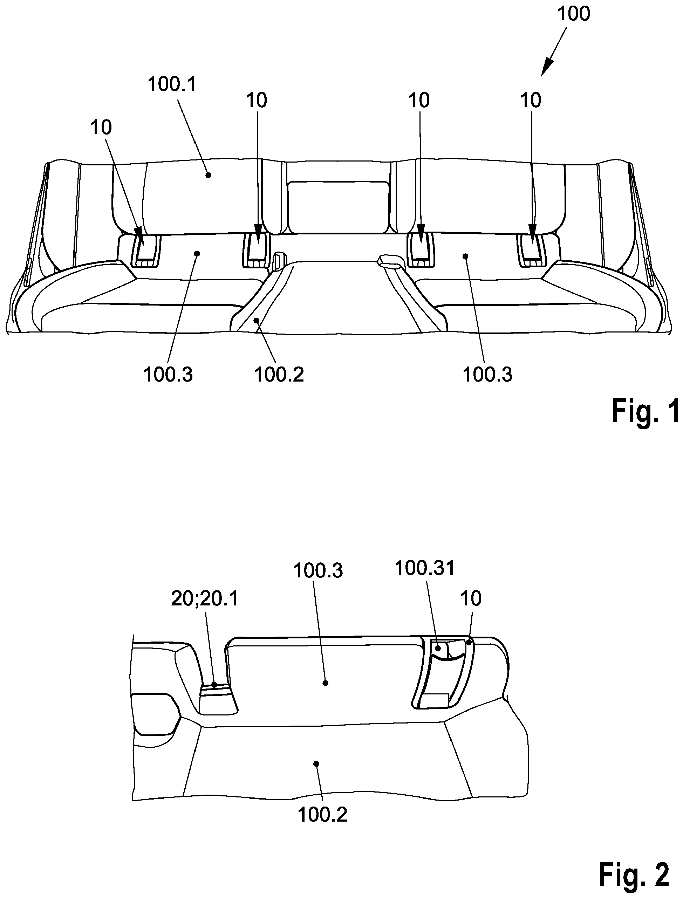

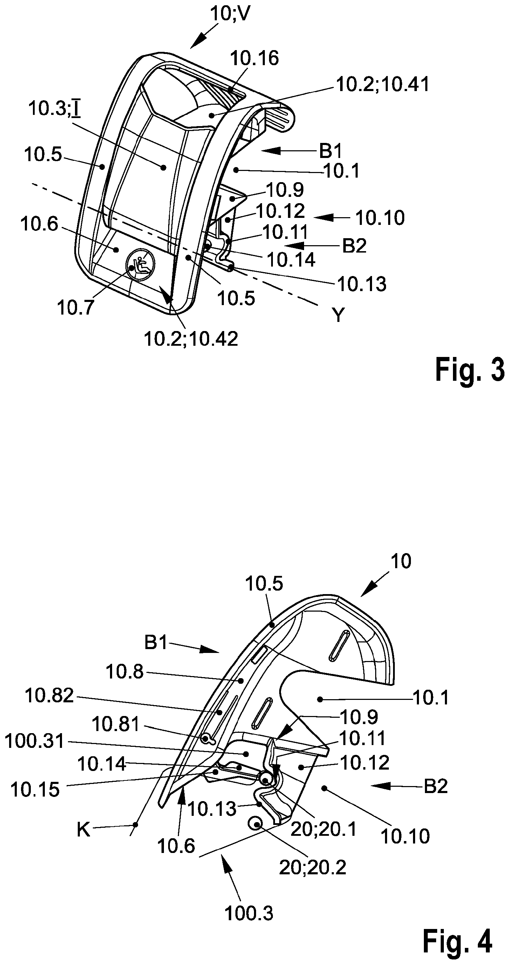

Die Figur 1 zeigt zunächst stellvertretend für einen Fahrzeugsitz eine Vorderansicht V der Hintersitzanlage 100 in der mehrere Verblendvorrichtungen 10 angeordnet sind. Je zwei Verblendvorrichtungen 10 gehören zu je einem über eine Blendenöffnung 10.2 (vergleiche vorab Figur 3) zugänglichen Halteelement 200.2, worauf noch detailliert eingegangen wird.

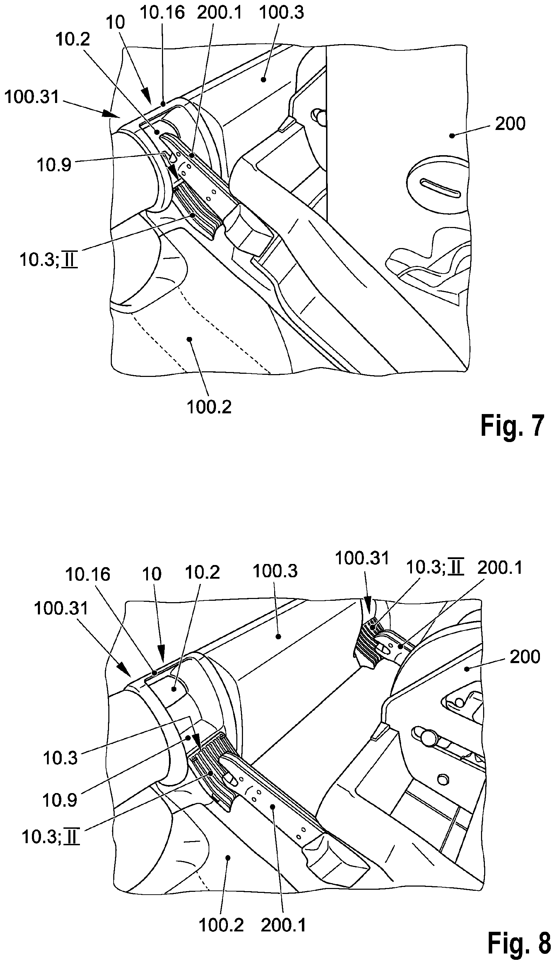

Mit anderen Worten, ist die Hintersitzanlage 100 derart ausgestattet, dass ein Kindersitz 200, der über entsprechende Aufnahmeelemente 200.1 verfügt, (vergleiche die Figuren 7 und 8) an den Halteelementen 200.2 anordbar, insbesondere fixierbar ist. Das Aufnahmeelement 200.1 und das Halteelement 200.2 bilden das bekannte Befestigungssystem, insbesondere das Isofix-Befestigungssystem.

Im Ausführungsbeispiel umfasst die Hintersitzanlage 100 ein ein- oder mehrteiliges Rückenlehnenteil 100.1 und ein- oder mehrteiliges Sitzteil 100.2 zwischen denen ein separates Polsterteil 100.3 angeordnet ist, das als Polsterriegel bezeichnet wird. Der Polsterriegel 100.3 wird auch als Funktionsleiste bezeichnet, da in dem Schaum des Polsterriegels 100.3 diejenigen Aussparungen 100.31 vorgesehenen sind, um Gurtschlösser und gemäß der Erfindung Verblendvorrichtungen 10 in den Aussparungen 100.31 derart unterzubringen, sodass eine aufgeräumte, formschöne Hintersitzanlage 100 ausgebildet ist.

Es versteht sich, dass die Anordnung der Verblendvorrichtung 10 nur gemäß dem Ausführungsbeispiel in einem Polsterriegel 100.3 erfolgt. Die Verblendvorrichtung 10 kann auch direkt in einem Polsterteil des Rückenlehnenteiles 100.1 angeordnet werden, welches mit seiner Unterseite direkt an die Hinterseite des Sitzteiles 100.2 angrenzt.

Die Figur 2 zeigt in einer vergrößerten Darstellung den Polsterriegel 100.3 in einer Ansicht schräg von oben auf den Polsterriegel 100.3 ohne Rückenlehnenteil 100.1.

Gemäß dem in Figur 1 dargestellten rechten Bereich der Hintersitzanlage 100 sind im Polsterriegel 100.3 zwei Aussparungen 100.31 angeordnet, wobei die linke Aussparung 100.31 ohne die Verblendvorrichtung 10 dargestellt ist und die rechte Aussparung 100.31 mit der montierten Verblendvorrichtung 10 versehen und dargestellt ist.

Es wird deutlich, dass sich die Vorderfront der Verblendvorrichtung 10 im montierten Zustand in einer Ebene mit der Aussenkontur des Polsterriegels 100.3 befindet, wodurch in vorteilhafter Weise ein bündiger Abschluss der Verblendvorrichtung 10 gegenüber dem Polsterriegel 100.3 gewährleistet wird. Mit anderen Worten, die Kontur der Verblendvorrichtung 10 ist derart ausgebildet, dass sie der Aussenkontur des Polsterteiles, gemäß dem Ausführungsbeispiel des Polsterriegels 100.3 folgt.

In Figur 2 wird ebenfalls gezeigt, dass es sich bei der Aussparung 100.31 um eine u-förmige Aussparung 100.31 handelt. Mit anderen Worten, die Aussparung 100.31 wird durch einen u-förmigen Freischnitt in der Funktionsleiste erzeugt, wodurch die Anforderungen in die Gestaltung der Verblendvorrichtung 10 derart erhöht werden, dass der obere offene Bereich des "U" durch die Verblendvorrichtung 10 ebenfalls verdeckt werden soll, wie noch weiter erläutert wird. Der u-förmige Freischnitt in der Funktionsleiste stellt eine bevorzugte Ausgestaltung dar. Unter entsprechender Anpassung der Verblendvorrichtung 10 im oberen Bereich B1 kann auch ein Freischnitt mit anderen Randkonturen des Freischnittes erfolgen, insbesondere kann er anders als in den Figuren dargestellt auch oben geschlossen ausgebildet sein.

In Figur 2 wird schließlich noch verdeutlicht, dass im Wesentlichen im unteren Bereich der u-förmigen Aussparung 100.31 ein Draht 20.1 (der auch als Steckdraht bezeichnet wird) angeordnet ist, der zu einer Drahtstruktur 20 unterhalb des Sitzteiles 100.2 gehört, die mehrere in einem Rahmen geführte Drähte umfasst und das Sitzteil 100.2 entsprechend verstärkt. Die Drahtstruktur wird deshalb auch als Drahtrahmen 20 bezeichnet. Der Drahtrahmen 20 ist im Wesentlichen in dem Schaum des Sitzteiles 100.2 eingeschäumt, wird jedoch zur Aufnahme von Komponenten an dafür vorgesehenen Stellen aus dem Schaum herausgeführt oder gemäß der vorliegenden Erfindung wird zur Anordnung von Komponenten ein Freischnitt des Schaumes durchgeführt, wodurch der Draht 20.1 im Wesentlichen frei liegt.

Gemäß Ausführungsbeispiel ist der Drahtrahmen 20 insbesondere der Draht 20.1 (Steckdraht) zur Verstärkung von Sitzteil 100.2 und Polsterriegel 100.3 in den Bereich des Polsterriegels 100.3 geführt, sodass der Drahtrahmen 20 im Ausführungsbeispiel ein einteiliges Bauteil ist.

Es versteht sich, dass in jeder der in Figur 1 und 2 gezeigten Aussparungen 100.31 ein Draht 20.1 angeordnet ist.

Die Figur 3 zeigt in einer perspektivischen Darstellung die Verblendvorrichtung 10. Die nachfolgende Beschreibung zur Ausgestaltung der Verblendvorrichtung 10 und der Anordnung der Verblendvorrichtung 10 erfolgt in einer Zusammenschau der Figur 3 und 4, wonach Figur 4 eine Seitenansicht der Verblendvorrichtung 10 und einen Schnitt durch den Schaum des Polsterriegels 100.3 im Bereich der Aussparung 100.31 zeigt. Die Konturlinie des Schaumes im unteren Bereich des Polsterriegels 100.3 ist in Figur 4 mit dem Bezugszeichen K gekennzeichnet.

Die Verblendvorrichtung 10 weist einen ersten oberen Bereich B1 auf, in dem die Kontur der Aussenkontur des Polsterriegels 100.2 nachgebildet ist. Auf der Rückseite der Verblendvorrichtung 10 ist im ersten oberen Bereich A der Verblendvorrichtung 10 eine relativ große maulartige Freimachung 10.1 (vergleiche vorab Figur 4) ausgebildet, auf deren Bedeutung noch eingegangen wird.

Die Gestaltung des ersten oberen Bereiches B1 ist in vorteilhafter Weise individuell an die Gestaltung des jeweiligen Polsterteiles anpassbar, da die zur Anordnung, das heißt der Befestigung der Verblendvorrichtung 10 erfindungsgemäß geschaffenen Teile der Verblendvorrichtung 10 im zweiten unteren Bereich B2 der Verblendvorrichtung 10, insbesondere auf der Rückseite der Verblendvorrichtung 10 angeordnet sind.

Die Verblendvorrichtung 10 umfasst ferner einen klappbaren Deckel 10.3, der sich vom ersten oberen Bereich B1 bis in den zweiten unteren Bereich B2 erstreckt.

Der klappbare Deckel 10.3 ist in Figur 3 in einer geschlossenen Nichtgebrauchsstellung I angeordnet und liegt bündig in der Blendenöffnung 10.2 der Verblendvorrichtung 10 innerhalb eines Blendenrahmens 10.5 ein.

Der klappbare Deckel 10.3 erstreckt sich von dem ersten oberen Bereich B1 bis in den zweiten unteren Bereich B2, jedoch wird die Öffnung 10.2 durch den Deckel 10.3 nicht vollständig verschlossen, wie in Figur 3 erkennbar ist.

Ein oberer offener Öffnungsbereich 10.2; 10.41 der Blendenöffnung 10.2 erlaubt einen Eingriff zur Betätigung des Deckels 10.3 und wird als Betätigungsöffnung bezeichnet.

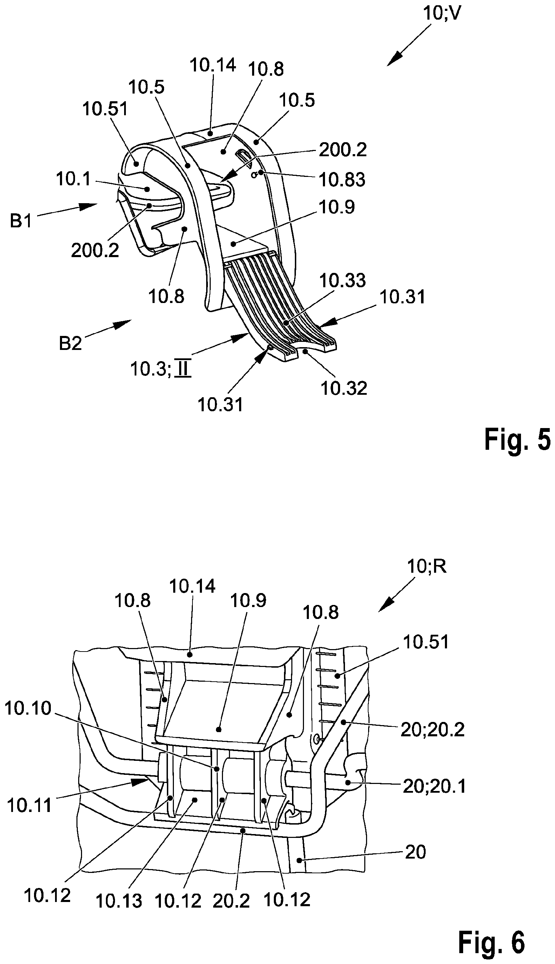

Ein unterer offener Öffnungsbereich 10.2; 10.42 der Blendenöffnung 10.2 erlaubt den Zugang des Deckels 10.3 zu einer stegartigen zwischen den Seitenholmen 10.8 der Verblendvorrichtung 10 liegenden Auflageschräge 10.6, der in seiner offenen Gebrauchsstellung II (vergleiche vorab Figur 5) mit seiner Vorderseite auf der Auflageschräge 10.6 zumindest teilweise aufliegt.

Nebenher wird offenbart, dass der Deckel 10.3 oder gemäß Ausführungsbeispiel die Auflageschräge 10.6 dazu geeignet ist, ein Logo 10.7 zur Kennzeichnung des Zugangs zu dem Isofix-Haltebügel des Isofix-Befestigungssystems aufzunehmen.

Der Deckel 10.3 ist auf einer Schwenkachse Y schwenkbar im Wesentlichen im unteren Bereich B2 in den Seitenholmen 10.8 der Verblendvorrichtung 10 angeordnet. Der Deckel 10.3 umfasst beidseitig nicht näher dargestellte Achselemente, die in Eingriffsöffnungen 10.81 eingreifen, die in den Seitenholmen 10.8 der Verblendvorrichtung 10 vorgesehen sind.

Die Seitenholme 10.8 weisen jeweils Schwächungsstrukturen 10.82 in der Art von Schlitzen auf, welche bereichsweise diejenige Flexibilität erzeugen, die benötigt wird, um die Achselemente in die Eingriffsöffnungen 10.81 einzubringen, sodass eine wiederaufhebbare aber feste unverlierbare Verbindung des Deckels 10.3 gegenüber dem Korpus, insbesondere den Seitenholmen 10.8 der Verblendvorrichtung 10 sowohl in der Nichtgebrauchsstellung I als auch in der in Figur 4 gezeigten Gebrauchsstellung I gegeben ist.

Die Verblendvorrichtung 10 und die Anordnung der Verblendvorrichtung 10 werden nachfolgend noch unter weiterer Zusammenschau mit den Figuren 5 und 6 erläutert.

Die Figur 5 zeigt die Verblendvorrichtung 10 in einer perspektivischen Darstellung schräg von vorn, wobei im unteren zweiten Bereich B2, die sich auf der Rückseite der Verblendvorrichtung 10 befindenden weiteren erfindungsgemäßen Teile weggelassen sind.

Die im unteren zweiten Bereich B2 auf der Rückseite der Verblendvorrichtung 10 angeordneten Teile sind jedoch gut in den Figuren 4 und 6 erkennbar, wobei die Figur 6 eine perspektivische Rückansicht R auf eine Aussparung 100.31 und die Verblendvorrichtung 10 (ohne Deckel 10.3) ermöglicht, sodass die Rückseite der Verblendvorrichtung 10 und der Drahtrahmen 20 mit dem Draht 20.1 sowie einem weiteren Draht 20.2 (der auch als Verdrehsicherungsdraht bezeichnet wird) des Drahtrahmens 20 erkennbar ist.

Die Seitenholme 10.8 weisen zudem gemäß Figur 5 in den Seitenholmen 10.8 Rastausnehmungen 10.83 auf, die mit Rastelementen 10.31 des Deckels 10.3 hinsichtlich Lage und Form korrespondieren, sodass der Deckel 10.3 in der Nichtgebrauchsstellung I in dem Korpus der Verblendvorrichtung 10 bündig verrastbar ist.

Die Figur 5 zeigt die Rastelemente 10.31 des Deckels 10.3, der in Figur 5 in der Gebrauchsstellung II angeordnet sind. Der Deckel 10.3 umfasst auf seiner Stirnseite eine komfortable Mulde 10.32 in den zur Betätigung von der Nichtgebrauchsstellung I in die Gebrauchsstellung II ein Finger eines Nutzers eingreift, wobei zusätzlich zum komfortablen Eingriff in Nichtgebrauchsstellung II des Deckels 10.3 (vergleiche Figur 3) der obere offene Öffnungsbereich 10.2; 10.41 der Blendenöffnung 10.2 ausgebildet ist.

In einer anderen Ausführungsvariante wird vorgeschlagen, dass der verrastete Deckel 10.3 einen Push-to-open-Mechanismus umfasst, der den Deckel (10,3) in der Nichtgebrauchsstellung I hält und der durch eine drückende Betätigung eines Nutzers auf die Fläche des Deckels 10.3 Unterstützung durch ein Federelement des Push-to-open-Mechanismus in seine Gebrauchsstellung II aufschwenkt und entsprechend wieder gegen die Kraft des Federelementes geschlossen wird. In vorteilhafter Weise kann dann auf die Mulde 10.32 (vergleiche Figur 5) und den oberen offenen Öffnungsbereich 10.2; 10.41 stirnseitig des Deckels 10.3 (vergleiche Figur 3) verzichtet werden.

Gemäß Figur 5 wird noch deutlich, dass in Gebrauchsstellung II des Deckels 10.3, der teilweise auf der Auflageschräge 10.6 und teilweise auf dem Polsterriegel 10.3 und dem Sitzteil 100.2 (vergleiche vorab Figuren 7 und 8) aufliegt, eine Rampe 10.3II gebildet wird, die zur entsprechenden Verstärkung und somit erhöhten Kraftaufnahme rückseitig des Deckels 10.3 Rippen 10.33 aufweist.

Die Rippen 10.33 haben in vorteilhafter Weise zudem die Wirkung, dass ein Nutzer bei in Gebrauchsstellung II angeordnetem Deckel 10.3 erkennt, dass eine nutzbare Rampenfläche vorliegt, die es ihm erlaubt, das Isofix-Rastelement 200.1 des Kindersitzes 200 (vergleiche vorab Figuren 7 und 8) über diese Rampe 10.311 in die Verblendvorrichtung 10 einzuführen, worauf noch weiter eingegangen wird.

Außerdem umfasst die Verblendvorrichtung 10, wie in Figur 7 deutlich wird, eine zwischen den Seitenholmen 10.8 angeordnete und an die Seitenholme 10.8 angeformten Verbindungssteg in der Art einer ebenen Führungsplatte 10.9. Die Führungsplatte 10.9 hat einerseits die Funktion, die Stabilität der Verblend- und Führungsvorrichtung 10 herzustellen und andererseits, dass ein Nutzer bei in Gebrauchsstellung II angeordnetem Deckel 10.3 erkennt, dass nicht nur eine für ihn nutzbare Rampenfläche vorliegt, um das Isofix-Rastelement 200.1 des Kindersitzes 200 (vergleiche vorab Figuren 7 und 8) über diese Rampe 10.3II in die Verblendvorrichtung 10 einzuführen, sondern, dass ferner im Anschluss an die Rampe 10.311 die Führungsplatte 10.9 angeordnet ist, die in vorteilhafter Weise dafür sorgt, dass Isofix-Rastelement 200.1 des Kindersitzes 200 problemlos noch weiter in Richtung des Isofix-Haltebügels 200.2 verlagerbar insbesondere in die Verblend- und Führungsvorrichtung 10 hinein verschiebbar ist.

Mit anderen Worten, in vorteilhafter Weise ist die Verblendvorrichtung 10 gleichzeitig ein Führungselement für den Isofix-Rastelement 200.1 des Kindersitzes 200, worin ein wesentlicher Vorteil gegenüber anderen Verblendvorrichtungen gesehen wird.

Die Führungselemente zusammengefasst sind, einerseits der Deckel 10.3 in Gebrauchsstellung II als Rampe 10.311 und die Führungsplatte 10.9 zwischen den Seitenholmen 10.8 sowie die Seitenholme 10.8 selbst.

Zudem ist die Verblendvorrichtung 10 gleichzeitig ein Blendenelement, welches den umlaufenden Blendenrahmen 10.5 mit dem entsprechenden überstehenden Rand 10.51 umfasst, der den Rand der Aussparung 100.31 im Polsterriegel 10.3 nach der Montage der Verblendvorrichtung 10 in ihre Gebrauchsposition 1. vollständig überdeckt, wodurch eine Überdeckung des Randes der Aussparung 100.31 im Polsterriegel 10.3 gewährleistet ist.

Zwischen den Seitenholmen 10.8 ist im oberen Bereich der Verblendvorrichtung 10 ein weiterer Verbindungssteg 10.16 angeordnet, der insbesondere der Stabilisierung im oberen Bereich B1 der Verblendvorrichtung 10 liegt, der auf seiner Rückseite bevorzugt ebenfalls eine rippenartige Verstärkungsstruktur aufweist, wie in Figur 3 erkennbar ist.

Schließlich sorgt die strukturelle Ausgestaltung der Verblendvorrichtung 10 zusammen mit dem Drahtrahmen 20 noch in vorteilhafter Weise für einfache Montage und sichere ortsfeste und dabei reversible Positionierung der Verblendvorrichtung 10 in der Aussparung 100.31 beziehungsweise an dem Drahtrahmen 20.

Auf die Anordnung des Drahtes 20.1 wurde bereits eingegangen und der Draht 20.2 (Verdrehsicherungsdraht) wurde bereits erwähnt. Es wird somit dafür gesorgt, dass neben dem Draht 20.1 noch der weitere Draht 20.2 (vergleiche Figuren 4 und 6) in den Bereich des Polsterriegels 100.3 geführt wird beziehungsweise angeordnet ist.

Anhand der Konturlinie des Schaumes im unteren Bereich des Polsterriegels 100.3 ist in Figur 4 gezeigt, dass der Draht 20.1 nur geringfügig im Schaum einliegt. Mit anderen Worten , der Freischnitt des Schaumes gemäß der Aussparung 100.31 erfolgt nur bis zu dem oberen Draht 20.1 (Steckdraht), auf den die Verblendvorrichtung 10 aufgesteckt wird, weshalb der obere Draht 20.1 als Steckdraht bezeichnet wird.

Der andere in einer Ausführungsvariante tiefer im Schaum liegende weitere zweite Draht 20.2 (Verdrehsicherungsdraht) dient zur Verdrehsicherung der sich in Gebrauchsposition 1. befindenden Verblendvorrichtung 10, sodass der weitere zweite Draht 20.2 nachfolgend als Verdrehsicherungs-Draht bezeichnet wird.

Im unteren Bereich B2 der Verblendvorrichtung 10 (vergleiche insbesondere Figur 4) unterhalb der Führungsplatte 10.9 ist ein sogenannter Stützfuss 10.10 ausgebildet, der auf seiner Vorderseite eine halbkreisförmige zylindrische Aufnahmevertiefung 10.11 aufweist. Der Stützfuss 10.10 umfasst ferner auf seiner Rückseite (vergleiche Figuren 4 und 6 in Zusammenschau) mindestens eine, bevorzugt mehrere Versteifungsrippen 10.12.

Der Verdrehsicherungs-Draht 20.2 liegt in Gebrauchsposition 1. der Verblendvorrichtung 10, wie in Figur 4 am Besten verdeutlicht ist, nahe eines Anschlagsteges 10.13 unter Ausbildung einer Anschlagsfläche des Stützfußes 10.10, das heißt, er steht in Gebrauchsposition 1. nicht direkt im Eingriff mit der Verblendvorrichtung 10.

Der Stützfuss 10.10 umfasst somit zusammengefasst, die Aufnahmevertiefung 10.11, den Anschlagsteg 10.13 sowie die Versteifungsrippen 10.12, die sowohl den Bereich der Aufnahmevertiefung 10.11 und des Anschlagsteges 10.13 übergreifen (vergleiche Figur 6) und somit versteifen.

Die Aufnahmevertiefung 10.11 dient in vorteilhafter Weise der Verrastung der Verblendvorrichtung 10 in Gebrauchsposition 1. an dem Steckdraht 20.1.

Zur positionsgetreuen Verrastung liegt (vergleiche Figur 4) der Aufnahmevertiefung 10.11 im Stützfuss 10.10 ein Gegensteg 10.14 gegenüber, der seinerseits ebenfalls zur Versteifung des Gegensteges 10.14 mindestens eine Versteifungsrippe 10.15 aufweist. In Figur 4 ist erkennbar, dass der Gegensteg 10.14 in Gebrauchsposition 1. der Verblendvorrichtung 10 oberhalb des Schaumes angeordnet ist. Ist der Deckel 10.3 in Nichtgebrauchsstellung I oder in Gebrauchsstellung II ist der Gegensteg 10.14 jedoch nicht sichtbar, da in beiden Stellungen des Deckels 10.3 für eine Überdeckung des Bereiches gesorgt wird.

Durch geometrische und strukturelle Ausgestaltung des Stützfußes 10.10 und des Gegensteges 10.14 erfolgt in vorteilhafter Weise eine Verrastung der Verblendvorrichtung 10 und eine Abstützung am eingeschäumten Drahtrahmen 20, insbesondere des Steckdrahtes 20.1 zwischen Gegensteg 10.14 und Aufnahmevertiefung 10.11. Durch den VerdrehsicherungsDraht 20.2 ist in vorteilhafter Weise mittels des Anschlagsteges 10.13 eine Verdrehsicherung der Verblendvorrichtung 10 hergestellt. Gemäß Figur 4 ist eine Drehbewegung der Verblendvorrichtung 10 in Uhrzeigerrichtung um den Steckdraht 20.1 nicht möglich, da der Anschlagsteg 10.13 in dem Schaum einliegt und nur Verpressung des Schaumes eine Drehbewegung der Verblendvorrichtung 10 zulässt. Sollte die Kraft, die eine Drehbewegung bewirkt, höher sein als die Kraft zum Verpressen des Schaumes, läuft der Anschlagsteg 10.13 auf den Verdrehsicherungs-Draht 20.2 auf, sodass ein weiteres Verdrehen in vorteilhafter Weise ausgeschlossen ist. Der Stützfuss 10.10 dient im Übrigen in vorteilhafter Weise als Gegenlager, sodass die zwischen Gegensteg 10.14 und Aufnahmevertiefung 10.11 verrastete Verblendvorrichtung 10 in einem etwaigen Crashfall auch nicht in Richtung Sitzteil 100.2 in den Innenraum des Fahrzeuges bewegt beziehungsweise entrastet werden kann.

In den Figuren 7 und 8 ist noch ergänzend detailliert dargestellt, welche Möglichkeiten der Nutzer hat, um den Kindersitz 200 einzubauen beziehungsweise zu befestigten.

Zum Einbau des Kindersitzes 200 wird der Deckel 10.3 (Kunde greift in die Mulde 10.32 und die Blendenöffnung 10.2; 10.41 der im oberen Bereich B1 der Verblendvorrichtung 10) durch Schwenken um die Schwenkachse Y heruntergeklappt und liegt in Gebrauchsstellung II des Deckels 10.3 der dann teilweise auf der Auflageschräge 10.6 und teilweise auf dem Polsterriegel 10.3 und dem Sitzteil 100.2 (vergleiche vorab Figuren 7 und 8) aufliegt und die Rampe 10.311 bildet, auf.

Zum Einbau des Kindersitzes 200 hat der Nutzer zwei Möglichkeiten, die Verrastung des Kindersitzes 200 vorzunehmen. Er schiebt das Isofix-Rastelement 200.1 gemäß Figur 7 entweder sofort auf die angeformte Ebene der Führungsplatte 10.9 oder gemäß Figur 8 zuerst auf die Rampe 10.311 und erst danach auf die angeformte Ebene der Führungsplatte 10.9.

Beide Vorgehensweisen erleichtern die Montage des Kindersitzes 200 erheblich. Hinzu kommt, dass der Rasthaken, mithin das Isofix-Rastelement 200.1 beim Einschieben automatisch in den Isofix-Haltebügel 200.2 einläuft, in vorteilhafter Weise ohne das es von Seiten des Nutzers einer weiteren Positionierung bedarf.

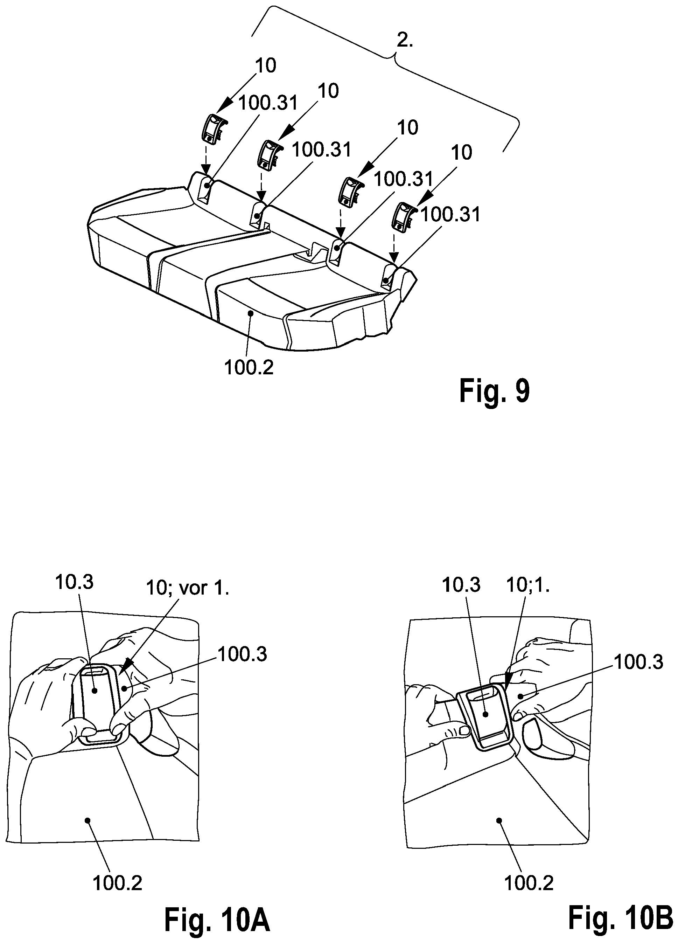

Schließlich wird anhand der Figuren 9 und 10A sowie 10B verdeutlicht, dass zur Montage der Verblendvorrichtung von der Nichtgebrauchsposition 2. in die Gebrauchsposition 1. keine zusätzlichen Materialien und Hilfswerkzeuge benötigt werden. Insofern liegt ein einfaches Montagekonzept zur Montage der Verblendvorrichtung vor. In Figur 9 ist die Verblendvorrichtung in Nichtgebrauchsposition 2. dargestellt.

Der Werker erfasst die Verblendvorrichtung 10 am Rahmen 10.5 und drückt die Verblendvorrichtung 10 leicht schräg von oben in die Aussparung 100.31. Die Montage ist insbesondere deswegen von oben in einfacher Weise möglich, da die Aussparung 100.31 als oben offenes "U" ausgebildet ist, sodass ein einfacher Zugang der Verblendvorrichtung 10 zur Montage der Verblendvorrichtung 10 in der Aussparung 100.31 gegeben ist.

Dabei wird der Steckdraht 20.1 unter leichter Verpressung des Schaumes an der Versteifungsrippe 10.15 des Gegensteges 10.14 (vergleiche Figur 4) auflaufen und an der Kontur der Versteifungsrippe 10.15 entlang laufen und in die Aufnahmevertiefung 10.11 einrasten, während der Anschlagsteg 10.13 den Verdrehsicherungs-Draht 20.2 hintergreift.

Schließlich wird der untere Bereich B2 der Verblendvorrichtung 10 noch gegen den Polsterriegel 100.3 gedrückt, wodurch unter Verpressung des Schaumes eine bündige Anlage des Blendrahmens 10.5 erreicht wird und der Anschlagsteg 10.13 in die endgültige Position kommt, in welcher der Steckdraht 20.1 nicht mehr ohne Weiteres aus der Aufnahmevertiefung 10.11 ausrastet.

In vorteilhafter Weise ist durch die Anordnung der Verblendvorrichtung 10 an dem fahrzeugsitzseitigen beziehungsweise hintersitzanlagenseitigen Drahtstruktur 20 der Verbau der Verblendvorrichtung 10 bereits beim Sitzlieferanten möglich. In den Fällen, bei denen die Verblendvorrichtung an dem strukturfesten Isofix-Haltebügel 200.2 befestigt ist, konnte der Verbau der Verblendvorrichtung erst erfolgen, nachdem der Fahrzeugsitz oder die Hintersitzanlage 100 montiert worden ist.

Abschließend noch einmal wesentliche Vorteile der Verblendvorrichtung 10 und der Anordnung. Die Verrastung der Verblendvorrichtung 10 und Stützfunktion erfolgt unterhalb des Freischnittes der Aussparung 100.31. Der Deckel 10.3 übernimmt die Funktion einer rippenversteiften Rampe 10.3II. Die Verrastung erfolgt nur auf dem Steckdraht 20.1. Die Verdrehsicherung erfolgt über den weiteren zweiten Verdrehsicherungsdraht 20.2, der nicht mit der Verblendvorrichtung 10 direkt verbunden und unsichtbar im Schaum angeordnet ist. Es ist keine Schaumfreiheit des weiteren zweiten Drahtes 20.2 (Verdrehsicherungsdraht) erforderlich, wodurch ein geringerer Aufwand im Schaumwerkzeug erreicht wird und geringere Anforderungen an die Toleranzkette beim Verbau der Verblendvorrichtung 10 vorliegen. Zur Montage der Verblendvorrichtung 10 werden keine zusätzlichen Materialien und Hilfswerkzeuge benötigt. Keine Befestigung der Verblendvorrichtung 10 am Isofix-Haltebügel 200.2, weshalb der Verbau der Verblendvorrichtung 10 beim Just-in-time-Lieferanten des Fahrzeugsitzes beziehungsweise der Hintersitzanlage 100 kostengünstig erfolgen kann. Intuitiver Einbau des Kindersitzes 200 durch den Nutzer gemäß den erläuterten Vorgehensweisen.

### Bezugszeichenliste

- 100: Hintersitzanlage
- 100.1: Rückenlehnenteil
- 100.2: Sitzteil
- 100.3: Polsterteil/Polsterriegel
- 100.31: Aussparung

- 200: Kindersitz
- 200.1: kindersitzseitiges Aufnahmeelement (Isofix-Rastelement)
- 200.2: strukturfestes Halteelement (Isofix-Haltebügel)

- 10: Verblend- und Führungsvorrichtung
- B1: erster oberer Bereich
- B2: zweiter unterer Bereich
- 10.1: Freimachung
- 10.2: Blendenöffnung
- 10.3: Deckel
- 10.3II: Rampe
- 10.31: Rastelemente
- 10.32: Mulde
- 10.33: Rippen
- 10.41: oberer offener Öffnungsbereich
- 10.42: unterer offener Öffnungsbereich
- 10.5: Blendenrahmen
- 10.51: Rand
- 10.6: Auflageschräge
- 10.7: Logo
- 10.8: Seitenholm/e
- 10.81: Eingriffsöffnungen
- 10.82: Schwächungsstrukturen
- 10.83: Rastausnehmungen
- 10.9: Führungselement, Verbindungssteg, Führungsplatte im unteren Bereich B1
- 10.10: Stützfuss
- 10.11: Aufnahmevertiefung
- 10.12: Versteifungsrippen
- 10.13: Anschlagsteg
- 10.14: Gegensteg
- 10.15: Versteifungsrippe
- 10.16: Verbindungsteg im oberen Bereich B1

- 20: Befestigungsstruktur, Drahtstruktur
- 20.1: erster Draht (Steckdraht)
- 20.2: zweiter Draht (Verdrehsicherungsdraht)

- 2.: Nichtgebrauchsposition der Verblendvorrichtung 10
- vor 1.: Position vor der Gebrauchsposition 1 im Polsterteil 100.3
- 1.: Gebrauchsposition der Verblendvorrichtung 10

- I: Nichtgebrauchsstellung des Deckels 10.3
- II: Gebrauchsstellung des Deckels 10.3

- Y: Schwenkachse
- K: Konturlinie
- V: Vorderansicht.
- R: Rückansicht

## Patentansprüche

1. Verblend- und Führungsvorrichtung (10) für eine Aussparung (100.31) eines Polsterteiles (100.3) in einem Fahrzeugsitz oder einer Hintersitzanlage (100), über die ein strukturfestes/karosseriefestes Halteelement (200.2) eines Befestigungssystems eines mit einem Aufnahmeelement (200.1) versehenen Ausstattungsteiles erreichbar ist,
wobei die Verblendvorrichtung (10) eine Blendenöffnung (10.2) mit einem in einer Nichtgebrauchsstellung (I) in der Blendenöffnung (2) angeordneten Deckel (10.3) aufweist, wobei der Deckel (10.3) im unteren Bereich (B2) der Verblend- und Führungsvorrichtung (10) schwenkbar angeordnet und in eine Gebrauchsstellung (II) schwenkbar ist, in der die Rückseite des Deckels (10.3) vor der Verblendvorrichtung (10) eine Rampe (10.3II) bildet, wobei in der Verblend- und Führungsvorrichtung (10) durch die Gebrauchsstellung (II) des Deckels (10.3) im unteren Bereich (B2) der Verblend- und Führungsvorrichtung (10) ein Führungselement (10.9) zugänglich wird, sodass das Aufnahmeelement (200.1) entweder ausschließlich über das Führungselement (10.9) oder über die Rampe (10.3II) und das Führungselement (10.9) zu dem Halteelement (200.2) führbar und an dem Halteelement (200.2) fixierbar ist, **dadurch gekennzeichnet, dass** auf der Rückseite der Verblend- und Führungsvorrichtung (10) ein Stützfuß (10.10) und ein Gegensteg (10.14) als Fixiervorrichtung zur Fixierung der Verblend- und Führungsvorrichtung (10) an einem ortsfesten Strukturteil (20; 20.1) des Fahrzeugsitzes oder der Hintersitzanlage (100) angeordnet sind, wobei der Stützfuß (10.10) auf seiner dem Gegensteg (10.14) gegenüberliegenden Seite eine Aufnahmevertiefung (10.11) aufweist, so dass zwischen dem Gegensteg (10.14) und der Aufnahmevertiefung (10.11) die Fixiervorrichtung in der Art eines Rastsitzes (10.11, 10.14) ausgebildet ist, wobei die Verblend- und Führungsvorrichtung (10) über den Rastsitz (10.11, 10.14) auf das ortsfeste Strukturteil (20; 20.1), welches als Steckelement (20.1) ausgebildet ist, in die Aufnahmevertiefung (10.11) gesteckt und mittels des Gegensteges (10.14) in dem Rastsitz (10.14, 10.11) verrastbar ist.

2. Verblend- und Führungsvorrichtung (10) nach Anspruch 1, **dadurch gekennzeichnet, dass** sich das gleichzeitig als Verbindungssteg wirkende, zwischen Seitenholmen (10.8) der Verblend- und Führungsvorrichtung (10) angeordnete Führungselement (10.9), welches als Führungsplatte ausgebildet ist, mit ihrer vorderen deckelseitigen Stirnseite sowohl in Nichtgebrauchsstellung (I) als auch in Gebrauchsstellung (II) des Deckels (10.3) an eine untere Stirnseite des Deckels (10.3) anschließt.

3. Verblend- und Führungsvorrichtung (10) nach Anspruch 1,**dadurch gekennzeichnet, dass** der Deckel (10.3) auf seiner Rückseite eine Verstärkungsstruktur aufweist.

4. Verblend- und Führungsvorrichtung (10) nach Anspruch 1, **dadurch gekennzeichnet, dass** der Deckel (10.3) über eine dem Deckel (10.3) und den Seitenholmen (10.8) zugeordnete Rastvorrichtung (10.31; 10.83) oder eine Rastvorrichtung mit einem Push-to-open-Mechanismus in Nichtgebrauchsstellung (I) bündig in der zwischen den Seitenholmen (10.8) ausgebildeten Blendenöffnung (10.2) angeordnet und an den Innenflächen der Seitenholme (10.8) reversibel verrastet ist.

5. Verblend- und Führungsvorrichtung (10) nach Anspruch 1, **dadurch gekennzeichnet, dass** der Stützfuß (10.10) und der Gegensteg (10.14) unterhalb der Führungsplatte (10.9) angeordnet und mit ihr verbunden sind.

6. Verblend- und Führungsvorrichtung (10) nach Anspruch 1, **dadurch gekennzeichnet, dass** der Stützfuss (10.10) an seinem unteren, der Führungsplatte (10.9) gegenüberliegenden Ende, einen Anschlagsteg (10.13) aufweist.

7. Verblend- und Führungsvorrichtung (10) nach den Ansprüchen 1 und 6, **dadurch gekennzeichnet, dass** der Stützfuss (10.10) und der Gegensteg (10.14) sowie der Anschlagsteg (10.13) jeweils mindestens ein Versteifungselement (10.12, 10.15) aufweisen.

8. Verblend- und Führungsvorrichtung (10) nach Anspruch 1, **dadurch gekennzeichnet, dass** zwischen den Seitenholmen (10.8), an die vordere Stirnseite der Führungsplatte (10.9) angrenzend, eine Auflageschräge (10.6) ausgebildet ist, auf welcher der Deckel (10.3) in seiner Gebrauchsstellung (II) zumindest teilweise aufliegt, wodurch die Rampe (10.3II) in ihrer Gebrauchsstellung (II) selbsttätig eine schräge Rampe (10.3II) bildet.

9. Anordnung einer Verblend- und Führungsvorrichtung (10) nach mindestens einem der Ansprüche 1 bis 8 in einer Aussparung (100.31) eines Polsterteiles (100.3) eines Fahrzeugsitzes oder einer Hintersitzanlage (100), über die ein Halteelement (200.2) eines Befestigungssystems eines mit einem Aufnahmeelement (200.1) versehenen Ausstattungsteiles erreichbar ist, **dadurch gekennzeichnet, dass** im unteren Bereich der Aussparung (100.31) in der Aussparung (100.31) oder nahe der Aussparung (100.31) im Schaum des Polsterteiles (100.3) ein Strukturteil einer Befestigungsstruktur (20) als Steckelement, in der Art eines Drahtes (20.1) angeordnet ist, an dem die Verblend- und Führungsvorrichtung (10) in ihrer Gebrauchsposition (1.) über den als Fixiervorrichtung ausgebildeten Rastsitz (10.14, 10.11) reversibel verrastet ist.

10. Anordnung nach Anspruch 9, **dadurch gekennzeichnet, dass** im unteren Bereich der Aussparung (100.31) in der Aussparung (100.31) oder nahe der Aussparung (100.31) im Schaum des Polsterteiles (100.3) ein weiteres Strukturteil der Befestigungsstruktur (20) als Verdrehsicherungselement (20.2), in der Art eines weiteren Drahtes (20.2) angeordnet ist, gegenüber dem die Verblend- und Führungsvorrichtung (10) in ihrer Gebrauchsposition (1.) über den der Verblend- und Führungsvorrichtung (10) zugeordneten Anschlagsteg (10.13) in der Aussparung (100.31) verdrehsicher angeordnet ist.

11. Anordnung nach Anspruch 9 und 10, **dadurch gekennzeichnet, dass** die Ausnahmevertiefung (10.11) und der Anschlagsteg (10.13) Teile des Stützfußes (10.10) sind, wobei
• der eine Draht (20.1) (Steckdraht) in Gebrauchsposition (1.) der Verblend- und Führungsvorrichtung (10) in der Aussparung (100.31) in die Ausnahmevertiefung (10.11) gesteckt und in der Ausnahmevertiefung (10.11) von einem Gegensteg (10.14) rastend gesichert ist, und
• der Anschlagsteg (10.13) des Stützfußes (10.10) in der Gebrauchsposition (1.) der Verblend- und Führungsvorrichtung (10) in der Aussparung (100.31) oder im Schaum nahe der Aussparung (100.31) angeordnet ist, wobei der Anschlagsteg (10.13) ohne Verpressung des Schaumes des Polsterteiles (100.3) oder unter Verpressung des Schaumes in den Schaum des Polsterteiles (100.3) eindringt, und den weiteren Verdrehsicherungsdraht (20.2) erreicht und derart hintergreift, sodass eine Drehbewegung der Verblend- und Führungsvorrichtung (10) in Belastungsrichtung verhindert wird.

12. Anordnung nach Anspruch10, **dadurch gekennzeichnet, dass** die Drähte (20.1, 20.2) Teile einer ortsfesten Befestigungsstruktur (20) einer Drahtstruktur im Polsterriegel (100.3) zwischen Rückenlehnenteil (100.1) und Sitzteil (100.2) oder Teil einer Befestigungsstruktur (20) einer Drahtstruktur (20) im Schaum eines Sitzteiles (100.2) sind, die in den Bereich des Schaumes des Polsterriegel (100.3) geführt sind.

13. Anordnung nach Anspruch 9, **dadurch gekennzeichnet, dass** die Aussparung (100.31) eine geschlossene Randkontur oder eine zumindest einseitig offene Randkontur aufweist, wobei die einseitig offene Randkontur eine u-förmige Aussparung ist, wobei der offene Bereich des "U" durch die Verblend- und Führungsvorrichtung (10) in ihrer Gebrauchsposition (1.) durch den oberen Bereich (B1) der Verblend- und Führungsvorrichtung (10) verblendet ist.

14. Anordnung nach Anspruch 9, **dadurch gekennzeichnet, dass** in einem zentralen Bereich der Aussparung (100.31) das strukturfeste/karosseriefeste Halteelement (200.2) des Befestigungssystems angeordnet ist, welches in der Gebrauchsposition (1.) der Verblend- und Führungsvorrichtung (10) in eine auf der Rückseite der Verblend- und Führungsvorrichtung (10) maulartige Freimachung (10.1) eingreift, wobei die Lage des strukturfesten/karosseriefesten Halteelementes (200.2) innerhalb der die Aussparung (100.31) und die Blendenöffnung (10.2), der sich in Gebrauchsposition (1.) befindenden Verblend- und Führungsvorrichtung (10) derart aufeinander abgestimmt sind, dass das Aufnahmeelement (200.1) des Ausstattungsteiles in einer Gebrauchsstellung (II) des Deckels (10.3) über die Führungsplatte (10.9) innerhalb der Blendenöffnung (10.2) zugänglich wird, wobei das Aufnahmeelement (200.1) zur Fixierung an dem Halteelement (200.2) ausschließlich mittels der Führungsplatte (10.9) oder über die durch den Deckel (10.3) in Gebrauchsstellung (II) vor der Verblend- und Führungsvorrichtung (10) gebildete Rampe (10.3II) und die Führungsplatte (10.9) zu dem Halteelement (200.2) positionsgenau geführt wird und an dem Halteelement (200.2) fixierbar ist.

## Claims

1. Covering and guiding device (10) for a recess (100.31) in a padded part (100.3) in a vehicle seat or a rear seat installation (100), through which a structurally fixed/body-fixed retaining element (200.2) of an attachment system of a fitting part provided with a receiving element (200.1) can be reached,
the covering device (10) comprising a covering opening (10.2) having a cover (10.3) which is arranged in a non-use position (I) in the covering opening (2), the cover (10.3) being pivotally arranged in the lower region (B2) of the covering and guiding device (10) and being pivotable into a use position (II) in which the rear side of the cover (10.3) forms a ramp (10.311) in front of the covering device (10), a guide element (10.9) being accessible in the covering and guiding device (10) through the use position (II) of the cover (10.3) in the lower region (B2) of the covering and guiding device (10) such that the receiving element (200.1) can be guided to the retaining element (200.2) either exclusively by means of the guide element (10.9) or by means of the ramp (10.3II) and the guide element (10.9) and can be fixed to the retaining element (200.2), **characterized in that** a support foot (10.10) and a counter projection (10.14) are arranged on the rear side of the covering and guiding device (10) as a fixing device for fixing the covering and guiding device (10) on a stationary structural part (20; 20.1) of the vehicle seat or of the rear seat installation (100), the support foot (10.10) comprising a receiving depression (10.11) on its side opposite the counter projection (10.14) such that the fixing device is formed in the manner of a latching seat (10.11, 10.14) between the counter projection (10.14) and the receiving depression (10.11), the covering and guiding device (10) being inserted into the receiving depression (10.11) via the latching seat (10.11, 10.14) on the stationary structural part (20; 20.1) which is designed as a plug element (20.1) and being latchable in the latching seat (10.14, 10.11) by means of the counter projection (10.14).

2. Covering and guiding device (10) according to claim 1,
**characterized in that** the guide element (10.9), which simultaneously acts as a connecting projection, is arranged between side members (10.8) of the covering and guiding device (10) and is designed as a guide plate, is connected with its front cover-side end face to a lower end face of the cover (10.3) both in the non-use position (I) and in the use position (II) of the cover (10.3).

3. Covering and guiding device (10) according to claim 1, **characterized in that** the cover (10.3) comprises a reinforcing structure on its rear side.

4. Covering and guiding device (10) according to claim 1,
**characterized in that** the cover (10.3) is arranged in the non-use position (I) flush in the covering opening (10.2) formed between the side members (10.8) via a latching device (10.31; 10.83) associated with the cover (10.3) and the side members (10.8) or a latching device having a push-to-open mechanism and is reversibly latched to the inner surfaces of the side members (10.8).

5. Covering and guiding device (10) according to claim 1,
**characterized in that** the support foot (10.10) and the counter projection (10.14) are arranged below the guide plate (10.9) and are connected thereto.

6. Covering and guiding device (10) according to claim 1,
**characterized in that** the support foot (10.10) comprises a stop projection (10.13) on its lower end opposite the guide plate (10.9).

7. Covering and guiding device (10) according to claims 1 and 6,
**characterized in that** the support foot (10.10) and the counter projection (10.14) as well as the stop projection (10.13) each comprise at least one stiffening element (10.12, 10.15).

8. Covering and guiding device (10) according to claim 1,
**characterized in that** a support bevel (10.6) is formed between the side members (10.8), adjacent to the front end face of the guide plate (10.9), on which support bevel the cover (10.3) at least partly rests in its use position (II), as a result of which the ramp (10.311) automatically forms an oblique ramp (10.311) in its use position (II).

9. Arrangement of a covering and guiding device (10) according to at least one of the claims 1 to 8 in a recess (100.31) in a padded part (100.3) of a vehicle seat or of a rear seat installation (100), through which a retaining element (200.2) of an attachment system of a fitting part provided with a receiving element (200.1) can be reached, **characterized in that** a structural part of an attachment structure (20) is arranged as a plug element, in the manner of a rod (20.1), in the lower region of the recess (100.31), in the recess (100.31) or near the recess (100.31) in the foam of the padded part (100.3), on which structural part the covering and guiding device (10) in its use position (1.) is reversibly latched by means of the latching seat (10.14, 10.11) formed as a fixing device.

10. Arrangement according to claim 9, **characterized in that** in a further structural part of the attachment structure (20) is arranged as an anti-rotation element (20.2), in the manner of a further rod (20.2), in the lower region of the recess (100.31), in the recess (100.31) or near the recess (100.31) in the foam of the padded part (100.3), relative to which further structural part the covering and guiding device (10) in its use position (1.) is arranged in the recess (100.31) so as to be secure against rotation by means of the stop projection (10.13) associated with the covering and guiding device (10).

11. Arrangement according to claim 9 and claim 10, **characterized in that** the receiving depression (10.11) and the stop projection (10.13) are parts of the support foot (10.10),
• the one rod (20.1) (plug rod) in the use position (1.) of the covering and guiding device (10) being inserted in the recess (100.31) into the receiving depression (10.11) and being secured in a latching manner in the receiving depression (10.11) by a counter projection (10.14), and
• the stop projection (10.13) of the support foot (10.10) in the use position (1.) of the covering and guiding device (10) being arranged in the recess (100.31) or in the foam near the recess (100.31), the stop projection (10.13) penetrating into the foam of the padded part (100.3) without pressing the foam of the padded part (100.3) or by pressing the foam, and reaching the further anti-rotation rod (20.2) and engaging behind it such that a rotational movement of the covering and guiding device (10) in the loading direction is prevented.

12. Arrangement according to claim 10, **characterized in that** the rods (20.1, 20.2) are parts of a stationary attachment structure (20) of a rod structure in the padded bar (100.3) between the backrest part (100.1) and the seat part (100.2) or parts of an attachment structure (20) of a rod structure (20) in the foam of a seat part (100.2) which are guided into the region of the foam of the padded bar (100.3).

13. Arrangement according to claim 9, **characterized in that** the recess (100.31) comprises a closed edge contour or an edge contour which is open at least on one side, the edge contour which is open on one side being a U-shaped recess, the open region of the "U" being covered by the covering and guiding device (10) in its use position (1.) by the upper region (B1) of the covering and guiding device (10).

14. Arrangement according to claim 9, **characterized in that** the structurally fixed/body-fixed retaining element (200.2) of the attachment system is arranged in a central region of the recess (100.31), which retaining element engages in the use position (1.) of the covering and guiding device (10) in a mouth-like clearance (10.1) on the rear side of the covering and guiding device (10), the position of the structurally fixed/body-fixed retaining element (200.2) within the recess (100.31) and the covering opening (10.2) being matched to one another when the covering and guiding device (10) is located in the use position (1.) in such a way that the receiving element (200.1) of the fitting part is accessible in a use position (II) of the cover (10.3) through the guide plate (10.9) within the covering opening (10.2), the receiving element (200.1) being guided to the retaining element (200.2) in a positionally accurate manner in order to be fixed to the retaining element (200.2) exclusively by means of the guide plate (10.9) or by means of the ramp (10.3II) formed by the cover (10.3) in the use position (II) in front of the covering and guiding device (10) and the guide plate (10.9) and being fixable to the retaining element (200.2).

## Revendications

1. Dispositif de parement et de guidage (10) pour un évidement (100.31) d'une pièce rembourrée (100.3) dans un siège de véhicule ou un système de sièges arrière (100), par l'intermédiaire duquel un élément de maintien (200.2) fixé à la structure/fixé à la carrosserie d'un système de fixation d'une pièce d'équipement pourvue d'un élément de réception (200.1) est accessible,
dans lequel le dispositif de parement (10) présente une ouverture de cache (10.2) comportant un couvercle (10.3) disposé dans une position de non-utilisation (I) dans l'ouverture de cache (2), dans lequel le couvercle (10.3) est disposé de manière à pouvoir pivoter dans la zone inférieure (B2) du dispositif de parement et de guidage (10) et peut pivoter dans une position d'utilisation (II), dans laquelle le côté arrière du couvercle (10.3) forme une rampe (10.3II) devant le dispositif de parement (10), dans lequel, dans le dispositif de parement et de guidage (10), un élément de guidage (10.9) est accessible par la position d'utilisation (II) du couvercle (10.3) dans la zone inférieure (B2) du dispositif de parement et de guidage (10), de sorte que l'élément de réception (200.1) peut être guidé vers l'élément de maintien (200.2) et fixé à l'élément de maintien (200.2) soit uniquement par l'intermédiaire de l'élément de guidage (10.9), soit par l'intermédiaire de la rampe (10.3II) et de l'élément de guidage (10.9),
**caractérisé en ce que,** sur le côté arrière du dispositif de parement et de guidage (10), un pied de support (10.10) et un contre-barreau (10.14) sont disposés en tant que dispositif de fixation pour la fixation du dispositif de parement et de guidage (10) sur une pièce structurelle (20 ; 20.1) stationnaire du siège de véhicule ou du système de sièges arrière (100), dans lequel le pied de support (10.10) présente, sur son côté opposé au contre-barreau (10.14), un renfoncement de réception (10.11), de sorte que, entre le contre-barreau (10.14) et le renfoncement de réception (10.11), le dispositif de fixation est formé sous la forme d'un siège à encliquetage (10.11, 10.14), dans lequel le dispositif de parement et de guidage (10) est enfiché par l'intermédiaire du siège à encliquetage (10.11, 10.14) sur la pièce structurelle (20 ; 20.1) stationnaire, laquelle est formée en tant qu'élément enfichable (20.1), dans le renfoncement de réception (10.11) et peut être encliqueté au moyen du contre-barreau (10.14) dans le siège à encliquetage (10.14, 10.11).

2. Dispositif de parement et de guidage (10) selon la revendication 1,
**caractérisé en ce que** l'élément de guidage (10.9), lequel sert en même temps de barreau de liaison, est disposé entre des longerons latéraux (10.8) du dispositif de parement et de guidage (10) et est formé comme une plaque de guidage, se raccorde avec son côté frontal avant côté couvercle au niveau d'un côté frontal inférieur du couvercle (10.3), aussi bien dans la position de non-utilisation (I) que dans la position d'utilisation (II) du couvercle (10.3).

3. Dispositif de parement et de guidage (10) selon la revendication 1,
**caractérisé en ce que** le couvercle (10.3) présente sur son côté arrière une structure de renforcement.

4. Dispositif de parement et de guidage (10) selon la revendication 1,
**caractérisé en ce que** le couvercle (10.3) est disposé, par l'intermédiaire d'un dispositif d'encliquetage (10.31 ; 10.83) associé au couvercle (10.3) et aux longerons latéraux (10.8) ou d'un dispositif d'encliquetage comportant un mécanisme d'ouverture par pression, dans la position de non-utilisation (I), à fleur dans l'ouverture de cache (10.2) formée entre les longerons latéraux (10.8) et est encliqueté de manière réversible sur les surfaces internes des longerons latéraux (10.8).

5. Dispositif de parement et de guidage (10) selon la revendication 1,
**caractérisé en ce que** le pied de support (10.10) et le contre-barreau (10.14) sont disposés en dessous de la plaque de guidage (10.9) et reliés à celle-ci.

6. Dispositif de parement et de guidage (10) selon la revendication 1,
**caractérisé en ce que** le pied de support (10.10) présente, au niveau de son extrémité inférieure opposée à la plaque de guidage (10.9), un barreau de butée (10.13).

7. Dispositif de parement et de guidage (10) selon les revendications 1 et 6,
**caractérisé en ce que** le pied de support (10.10) et le contre-barreau (10.14) ainsi que le barreau de butée (10.13) présentent respectivement au moins un élément de raidissement (10.12, 10.15).

8. Dispositif de parement et de guidage (10) selon la revendication 1,
**caractérisé en ce que,** entre les longerons latéraux (10.8), une pente d'appui (10.6) est formée de manière adjacente au côté frontal avant de la plaque de guidage (10.9), sur laquelle pente d'appui le couvercle (10.3) s'appuie au moins partiellement dans sa position d'utilisation (II), moyennant quoi la rampe (10.3II) forme automatiquement une rampe inclinée (10.3II) dans sa position d'utilisation (II).

9. Agencement d'un dispositif de parement et de guidage (10) selon au moins l'une des revendications 1 à 8 dans un évidement (100.31) d'une pièce rembourrée (100.3) d'un siège de véhicule ou d'un système de sièges arrière (100), par l'intermédiaire duquel un élément de maintien (200.2) d'un système de fixation d'une pièce d'équipement pourvue d'un élément de réception (200.1) est accessible, **caractérisé en ce que,** dans la zone inférieure de l'évidement (100.31), dans l'évidement (100.31) ou à proximité de l'évidement (100.31) dans la mousse de la pièce rembourrée (100.3), une pièce structurelle d'une structure de fixation (20) est disposée en tant qu'élément enfichable, sous la forme d'un fil (20.1), sur laquelle pièce structurelle le dispositif de parement et de guidage (10) est encliqueté de manière réversible dans sa position d'utilisation (1.) par l'intermédiaire du siège à encliquetage (10.14, 10.11) formé sous forme de dispositif de fixation.

10. Agencement selon la revendication 9, **caractérisé en ce que,** dans la zone inférieure de l'évidement (100.31), dans l'évidement (100.31) ou à proximité de l'évidement (100.31) dans la mousse de la pièce rembourrée (100.3), une autre pièce structurelle de la structure de fixation (20) est disposée en tant qu'élément antirotation (20.2), sous la forme d'un autre fil (20.2), par rapport à laquelle autre pièce structurelle le dispositif de parement et de guidage (10) est disposé de manière à ne pas pouvoir tourner dans l'évidement (100.31) dans sa position d'utilisation (1.) par l'intermédiaire du barreau de butée (10.13) associé au dispositif de parement et de guidage (10).

11. Agencement selon les revendications 9 et 10, **caractérisé en ce que** le renfoncement de réception (10.11) et le barreau de butée (10.13) sont des pièces du pied de support (10.10), dans lequel
• le fil (20.1) (fil enfichable), dans la position d'utilisation (1.) du dispositif de parement et de guidage (10), est enfiché dans l'évidement (100.31) dans le renfoncement de réception (10.11) et est sécurisé par encliquetage dans le renfoncement de réception (10.11) par un contre-barreau (10.14), et
• le barreau de butée (10.13) du pied de support (10.10), dans la position d'utilisation (1.) du dispositif de parement et de guidage (10), est disposé dans l'évidement (100.31) ou dans la mousse à proximité de l'évidement (100.31), dans lequel le barreau de butée (10.13) pénètre, sans compression de la mousse de la pièce rembourrée (100.3) ou sous compression de la mousse, dans la mousse de la pièce rembourrée (100.3) et atteint l'autre fil antirotation (20.2) et vient en prise par l'arrière avec celui-ci, de sorte qu'un mouvement de rotation du dispositif de parement et de guidage (10) est empêché dans la direction de charge.

12. Agencement selon la revendication 10, **caractérisé en ce que** les fils (20.1, 20.2) sont des pièces d'une structure de fixation (20) stationnaire d'une structure de fils dans le loquet rembourré (100.3) entre la pièce de dossier (100.1) et la pièce d'assise (100.2) ou une pièce d'une structure de fixation (20) d'une structure de fils (20) dans la mousse d'une pièce d'assise (100.2), lesquels fils sont guidés dans la zone de la mousse du loquet rembourré (100.3).

13. Agencement selon la revendication 9, **caractérisé en ce que** l'évidement (100.31) présente un contour périphérique fermé ou un contour périphérique ouvert au moins d'un côté, dans lequel le contour périphérique ouvert d'un côté est un évidement en forme de u, dans lequel la zone ouverte du « U » est cachée par le dispositif de parement et de guidage (10) dans sa position d'utilisation (1.) par la zone supérieure (B1) du dispositif de parement et de guidage (10).

14. Agencement selon la revendication 9, **caractérisé en ce que,** dans une zone centrale de l'évidement (100.31), l'élément de maintien (200.2) fixé à la structure/fixé à la carrosserie du système de fixation est disposé, lequel élément de maintien, dans la position d'utilisation (1.) du dispositif de parement et de guidage (10), vient en prise dans un dégagement (10.1) en forme de mâchoire sur le côté arrière du dispositif de parement et de guidage (10), dans lequel les positions de l'élément de maintien (200.2) fixé à la structure/fixé à la carrosserie à l'intérieur l'évidement (100.31) et l'ouverture de cache (10.2) coïncident les unes avec les autres lorsque le dispositif de parement et de guidage (10) se trouve dans la position d'utilisation (1.), de telle sorte que l'élément de réception (200.1) de la pièce d'équipement, dans une position d'utilisation (II) du couvercle (10.3), est accessible par l'intermédiaire de la plaque de guidage (10.9) à l'intérieur de l'ouverture de cache (10.2), dans lequel l'élément de réception (200.1), pour la fixation sur l'élément de maintien (200.2), est guidé en position exacte vers l'élément de maintien (200.2) et peut être fixé à l'élément de maintien (200.2) uniquement au moyen de la plaque de guidage (10.9) ou par l'intermédiaire de la rampe (10.3II), formée par le couvercle (10.3) dans la position d'utilisation (II) devant le dispositif de parement et de guidage (10), et de la plaque de guidage (10.9).
